# EUROPÄISCHE PATENTANMELDUNG

(11) **EP 4 450 211 A2**
(43) Veröffentlichungstag der Anmeldung: **23.10.2024**
(21) Anmeldenummer: 24164994.6
(22) Anmeldetag: 21.03.2024
(51) Int. Cl.: B23K 26/36

(54) **VERFAHREN UND VORRICHTUNG ZUM ERSTELLEN EINER AUS MUSTERPUNKTEN BESTEHENDEN MUSTERFIGUR IN EINEM WERKSTÜCK, BEARBEITUNGSVORRICHTUNG SOWIE COMPUTERPROGRAMMPRODUKT**

(30) Priorität: 17.04.2023 DE 102023109575
(71) Anmelder: JENOPTIK Automatisierungstechnik GmbH, 07745 Jena (DE)
(72) Erfinder: Kern, André, 07745 Jena (DE); Langebach, Jan, 07745 Jena (DE); Grabiger, Benjamin, 07745 Jena (DE); Doering, Christian, 07745 Jena (DE)
(74) Vertreter: Waldauf, Alexander

(57) **Zusammenfassung**

Ein Verfahren zum Erstellen einer aus Musterpunkten bestehenden Musterfigur (108) in einem Werkstück (102) unter Verwendung einer Lasereinrichtung (104) einer Bearbeitungsvorrichtung (100) umfasst ein Einlesen von ersten Positionsdaten, die Positionen von ersten Musterpunkten auf dem Werkstück (102) definieren, wobei die ersten Musterpunkte einem dem ersten Muster zugeordneten ersten Abschnitt einer Polylinie der Musterfigur (108) zugeordnet sind, ein Einbringen der ersten Musterpunkte in das Werkstück (102) während sich die Bearbeitungsvorrichtung (100) in einer ersten Pose befindet, ein Erkennen eines Verlaufs eines Endes des ersten Abschnitts der Polylinie, ein Weiterführen des Verlaufs des Endes des ersten Abschnitts der Polylinie und ein Einbringen von zweiten Musterpunkten eines zweiten Abschnitts der Polylinie in das Werkstück (102) unter Verwendung des weitergeführten Verlaufs, während sich die Bearbeitungsvorrichtung (100) in einer zweiten Pose befindet.

## Beschreibung

Gegenstand der vorliegenden Erfindung sind Verfahren und Vorrichtung zum Erstellen einer aus Musterpunkten bestehenden Musterfigur in einem Werkstück, Bearbeitungsvorrichtung sowie Computerprogrammprodukt.

Musterfiguren werden beispielsweise in lackierte Fahrzeugkomponenten mittels Laserablation erzeugt. Dazu werden beispielsweise sogenannte Galvanometerscanner eingesetzt.

Die DE 10 2021 109 043 A1 beschreibt ein Verfahren zum Steuern eines Laser-Bearbeitungsprozesses einer Oberfläche eines Werkstücks.

In der DE 10 2011 106 097 A1 wird ein Verfahren zum Bearbeiten eines Werkstückes beschrieben, wonach der Laserstrahl mittels einer Strahlführung mehrere voneinander beabstandete Lasermarkierungen als Punkte zumindest einer vorgegebenen Raumkurve erzeugt.

Die EP 4 000 792 A1 offenbart ein Laserablationsverfahren zum Gravieren eines Werkstücks mit einer Textur.

In der WO 2008/ 113 535 A1 wird ein Laserstrahl mittels einer Strahlführung innerhalb eines Arbeitsfensters über die Werkstückoberfläche geführt.

Die WO 2010/ 126 864 A1 beschreibt ein Grafiksystem mit gestaffelter Laserätzlinie, das dazugehörige Verfahren und entsprechende Herstellungsartikel.

### Offenbarung der Erfindung

Vor diesem Hintergrund werden mit dem hier vorgestellten Ansatz ein verbessertes Verfahren und eine verbesserte Vorrichtung zum Erstellen einer aus Musterpunkten bestehenden Musterfigur in einem Werkstück sowie eine verbesserte Bearbeitungsvorrichtung sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der beschriebene Ansatz ermöglicht das nahtlose Einbringen einer sich über unterschiedliche Scanfelder einer Lasereinrichtung erstreckenden großflächigen Musterfigur.

Ein Verfahren zum Erstellen einer aus Musterpunkten bestehenden Musterfigur in einem Werkstück unter Verwendung einer Lasereinrichtung einer Bearbeitungsvorrichtung, wobei sich die Musterfigur zumindest aus einem ersten Muster und einem mit dem ersten Muster zusammenhängenden zweiten Muster zusammensetzt:
Einlesen von ersten Positionsdaten, die Positionen von ersten Musterpunkten auf dem Werkstück definieren, wobei die ersten Musterpunkte einem dem ersten Muster zugeordneten ersten Abschnitt einer Polylinie der Musterfigur zugeordnet sind;
Einstellen einer ersten Pose der Bearbeitungsvorrichtung, um ein Scanfeld der Lasereinrichtung auf eine zum Einbringen des ersten Musters vorgesehene erste Fläche des Werkstücks auszurichten;
Ansteuern der Lasereinrichtung zum Einbringen der ersten Musterpunkte in die erste Fläche des Werkstücks unter Verwendung der ersten Positionsdaten, während sich die Bearbeitungsvorrichtung in der ersten Pose befindet;
Einstellen einer zweiten Pose, um das Scanfeld der Lasereinrichtung auf eine zum Einbringen des zweiten Musters vorgesehene zweite Fläche des Werkstücks auszurichten;
Erkennen eines an die zweite Fläche angrenzenden Verlaufs eines Endes des ersten Abschnitts der Polylinie;
Weiterführen des Verlaufs des Endes des ersten Abschnitts der Polylinie in die zweite Fläche hinein, um eine Position eines in der zweiten Fläche angeordneten Aufpunkts eines dem zweiten Muster zugeordneten zweiten Abschnitts der Polylinie zu bestimmen;
Einlesen von zweiten Positionsdaten, die Positionen von zweiten Musterpunkten auf dem Werkstück definieren, wobei die zweiten Musterpunkte dem zweiten Abschnitt der Polylinie zugeordnet sind, wobei ein Endpunkt der ersten Musterpunkte und ein Anfangspunkt der zweiten Musterpunkte einen Übergang der Polylinie von dem ersten Muster zu dem zweiten Muster definieren und ein Endpunkt der zweiten Musterpunkte ein Ende der Polylinie in dem zweiten Muster definiert;
Bestimmen von angepassten zweiten Positionsdaten, die an die Position des Aufpunkts angepasste Positionen der zweiten Musterpunkte auf dem Werkstück definieren, wobei eine Position des Anfangspunkts der zweiten Musterpunkte durch die Position des Aufpunkts ersetzt wird;
Ansteuern der Lasereinrichtung zum Einbringen der zweiten Musterpunkte in die zweite Fläche des Werkstücks unter Verwendung der angepassten zweiten Positionsdaten, während sich die Bearbeitungsvorrichtung in der zweiten Pose befindet.

Die Schritte des Verfahrens lassen sich vorteilhafterweise zumindest teilweise wiederholt ausführen, um die Musterfigur unter Verwendung einer Mehrzahl von Posen der Bearbeitungsvorrichtung großflächig in das Werkstück einzubringen.

Um einen Übergang der Musterfigur zwischen zwei aufeinanderfolgenden Posen sauber herzustellen kann der Schritt des Erkennens einen Schritt des Ausrichtens einer Bilderfassungseinrichtung der Bearbeitungsvorrichtung auf den Übergang der Polylinie von dem ersten Muster zu dem zweiten Muster umfassen, einen Schritt des Erfassens eines Bilds des Übergangs unter Verwendung der Bilderfassungseinrichtung umfassen, einen Schritt des Erkennens von Abbildern von ersten Musterpunkten in dem Bild umfassen, und einen Schritt des Bestimmens des Verlaufs des Endes des ersten Abschnitts der Polylinie unter Verwendung der Abbilder von ersten Musterpunkten umfassen. Das Ausrichten der Bilderfassungseinrichtung kann beispielsweise durch ein Ausrichten eines Blickwinkels der Bilderfassungseinrichtung erreicht werden, beispielsweise unter Verwendung eines Scanners.

Der Schritt des Erkennens kann einen Schritt des Unterleuchtens des Übergangs der Polylinie von dem ersten Muster zu dem zweiten Muster umfassen. Dadurch lassen sich die bereits eingebrachten Musterpunkte gut erkennen.

Im Schritt des Weiterführens kann der Verlauf des Endes des ersten Abschnitts der Polylinie durch lineare Regression in die zweite Fläche hinein weitergeführt werden. Damit kann auf ein bekanntes und einfach umzusetzendes Verfahren zurückgegriffen werden.

Um einen Endpunkt einer Polylinie der Musterfigur sauber herzustellen, kann im Schritt des Bestimmens von angepassten zweiten Positionsdaten eine angepasste Position des Endpunkts der zweiten Musterpunkte gelöscht werden, wenn eine Länge des durch die angepassten Positionen von zweiten Musterpunkten auf dem Werkstück definierten zweiten Abschnitts der Polylinie länger als eine vorbestimmte Länge des zweiten Abschnitts der Polylinie ist.

Zusätzlich oder alternativ kann dazu im Schritt des Bestimmens von angepassten zweiten Positionsdaten ein Abstand zwischen benachbarten angepassten Positionen der zweiten Musterpunkte gegenüber einem Abstand zwischen benachbarten Positionen der zweiten Musterpunkte verändert werden, wenn sich eine Länge des durch die angepassten Positionen von zweiten Musterpunkten auf dem Werkstück definierten zweiten Abschnitts der Polylinie von einer vorbestimmten Länge des zweiten Abschnitts der Polylinie unterscheidet.

Um neben der genannten Polylinie zumindest eine weitere Polylinie in das Werkstück einzubringen, können im Schritt des Einlesens von ersten Positionsdaten, die ersten Positionsdaten ferner Positionen von weiteren ersten Musterpunkten auf dem Werkstück definieren, wobei die weiteren ersten Musterpunkte einem dem ersten Muster zugeordneten ersten Abschnitt einer weiteren Polylinie der Musterfigur zugeordnet sind. Ferner kann im Schritt des Ansteuerns der Lasereinrichtung zum Einbringen der ersten Musterpunkte, die Lasereinrichtung ferner zum Einbringen der weiteren ersten Musterpunkte in die erste Fläche des Werkstücks unter Verwendung der ersten Positionsdaten angesteuert werden, während sich die Bearbeitungsvorrichtung in der ersten Pose befindet. In einem wiederholten Schritt des Erkennens kann ein an die zweite Fläche angrenzender Verlauf eines Endes des ersten Abschnitts der weiteren Polylinie erkannt werden. In einem wiederholten Schritt des Weiterführens kann der Verlauf des Endes des ersten Abschnitts der weiteren Polylinie in die zweite Fläche hinein weitergeführt werden, um eine Position eines in der zweiten Fläche angeordneten weiteren Aufpunkts eines dem zweiten Muster zugeordneten zweiten Abschnitts der weiteren Polylinie zu bestimmen. Im Schritt des Einlesens von zweiten Positionsdaten, können die zweiten Positionsdaten ferner Positionen von weiteren zweiten Musterpunkten auf dem Werkstück definieren, wobei die weiteren zweiten Musterpunkte dem zweiten Abschnitt der weiteren Polylinie zugeordnet sind, wobei ein Endpunkt der weiteren ersten Musterpunkte und ein Anfangspunkt der weiteren zweiten Musterpunkte einen Übergang der weiteren Polylinie von dem ersten Muster zu dem zweiten Muster definieren und ein Endpunkt der weiteren zweiten Musterpunkte ein Ende der weiteren Polylinie in dem zweiten Muster definiert. Im Schritt des Bestimmens von angepassten zweiten Positionsdaten können die angepassten zweiten Positionsdaten bestimmt werden, die ferner an die Position des weiteren Aufpunkts angepasste Positionen der weiteren zweiten Musterpunkte auf dem Werkstück definieren, wobei eine Position des Anfangspunkts der weiteren zweiten Musterpunkte durch die Position des weiteren Aufpunkts ersetzt werden kann. Im Schritt des Ansteuerns der Lasereinrichtung zum Einbringen der zweiten Musterpunkte, kann die Lasereinrichtung ferner zum Einbringen der weiteren zweiten Musterpunkte in die zweite Fläche des Werkstücks unter Verwendung der angepassten zweiten Positionsdaten angesteuert werden, während sich die Bearbeitungsvorrichtung in der zweiten Pose befindet.

Um neben der genannten Polylinie zumindest eine zusätzliche Polylinie in das Werkstück einzubringen, die mit der Polylinie zusammenläuft können im Schritt des Einlesens von ersten Positionsdaten, die ersten Positionsdaten ferner Positionen von zusätzlichen ersten Musterpunkten auf dem Werkstück definieren, wobei die zusätzlichen ersten Musterpunkte einem dem ersten Muster zugeordneten ersten Abschnitt einer zusätzlichen Polylinie der Musterfigur zugeordnet sind. Ferner kann im Schritt des Ansteuerns der Lasereinrichtung zum Einbringen der ersten Musterpunkte, die Lasereinrichtung ferner zum Einbringen der zusätzlichen ersten Musterpunkte in die erste Fläche des Werkstücks unter Verwendung der ersten Positionsdaten angesteuert werden, während sich die Bearbeitungsvorrichtung in der ersten Pose befindet. In dem Schritt des Erkennens kann ferner ein an die zweite Fläche angrenzender Verlauf eines Endes des ersten Abschnitts der zusätzlichen Polylinie erkannt werden. In dem Schritt des Weiterführens kann ferner der Verlauf des Endes des ersten Abschnitts der zusätzlichen Polylinie in die zweite Fläche hinein weitergeführt werden, um eine Position eines in der zweiten Fläche angeordneten zusätzlichen Aufpunkts eines dem zweiten Muster zugeordneten zweiten Abschnitts der zusätzlichen Polylinie zu bestimmen. Im Schritt des Einlesens von zweiten Positionsdaten können die zweiten Positionsdaten ferner Positionen von zusätzlichen zweiten Musterpunkten auf dem Werkstück definieren, wobei die zusätzlichen zweiten Musterpunkte einem dem zweiten Muster zugeordneten zweiten Abschnitt der zusätzlichen Polylinie zugeordnet sind, wobei ein Endpunkt der zusätzlichen ersten Musterpunkte und ein Anfangspunkt der zusätzlichen zweiten Musterpunkte einen Übergang der zusätzlichen Polylinie von dem ersten Muster zu dem zweiten Muster definieren und ein Endpunkt der zusätzlichen zweiten Musterpunkte ein Ende der zusätzlichen Polylinie in dem zweiten Muster definiert, wobei die Position des Endpunkts der zweiten Musterpunkte mit der Position des Endpunkts der zusätzlichen zweiten Musterpunkte zusammenfällt, um die Enden der Polylinie und der zusätzlichen Polylinie zusammenzuführen. Im Schritt des Bestimmens von angepassten zweiten Positionsdaten können die angepassten zweiten Positionsdaten bestimmt werden, die ferner an die Position des zusätzlichen Aufpunkts angepasste Positionen der zusätzlichen zweiten Musterpunkte auf dem Werkstück definieren, wobei eine Position des Anfangspunkts der zusätzlichen zweiten Musterpunkte durch die Position des zusätzlichen Aufpunkts ersetzt werden kann. Im Schritt des Ansteuerns der Lasereinrichtung zum Einbringen der zweiten Musterpunkte kann die Lasereinrichtung ferner zum Einbringen der zusätzlichen zweiten Musterpunkte in die zweite Fläche des Werkstücks unter Verwendung der angepassten zweiten Positionsdaten angesteuert werden, während sich die Bearbeitungsvorrichtung in der zweiten Pose befindet.

Um die Polylinie und die zusätzliche Polylinie sauber zusammenführen zu können, kann im Schritt des Bestimmens von angepassten zweiten Positionsdaten ein Abstand zwischen benachbarten angepassten Positionen der zusätzlichen zweiten Musterpunkte gegenüber einem Abstand zwischen benachbarten Positionen der zusätzlichen zweiten Musterpunkte verändert werden, wenn eine Länge des durch die angepassten Positionen von zusätzlichen zweiten Musterpunkten auf dem Werkstück definierten zweiten Abschnitts der zusätzlichen Polylinie länger als eine vorbestimmte Länge des zweiten Abschnitts der zusätzlichen Polylinie ist.

Als Vorbereitung kann das Verfahren einen Schritt des Morphens der Musterfigur auf ein Höhenprofil des Werkstücks, einen Schritt des Definierens der ersten Pose und der zweiten Pose der Bearbeitungsvorrichtung, und einen Schritt des Teilens der Musterfigur in das erste Muster und das zweite Muster umfassen. Unter Morphen kann ein gezieltes Verzerren der Musterfigur verstanden werden. Beispielsweise kann dadurch eine ursprünglich zweidimensional vorliegende Musterfigur in eine an das Höhenprofil des Werkstücks angepasste dreidimensionale Musterfigur überführt werden..

Optional kann das Verfahren dabei einen Schritt des Aufnehmens des Höhenprofils des Werkstücks umfassen.

Dieses Verfahren kann beispielsweise in Software oder Hardware oder in einer Mischform aus Software und Hardware beispielsweise in einem Steuergerät implementiert sein.

Eine entsprechende Vorrichtung zum Erstellen einer aus Musterpunkten bestehenden Musterfigur in einem Werkstück unter Verwendung einer Lasereinrichtung einer Bearbeitungsvorrichtung ist eingerichtet, um die Schritte einer Ausführungsform des genannten Verfahrens in entsprechenden Einheiten auszuführen und/oder anzusteuern.

Dementsprechend kann eine Bearbeitungsvorrichtung eine genannte Lasereinrichtung und eine genannte Vorrichtung umfassen.

Die Vorrichtung ist ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 ein Ausführungsbeispiel einer Bearbeitungsvorrichtung zum Bearbeiten eines Werkstücks;
Fig. 2 eine schematische Darstellung einer Musterfigur auf einem Werkstück gemäß einem Ausführungsbeispiel;
Fig. 3 ein Ausführungsbeispiel eines Bereichs der in Fig. 2 gezeigten Musterfigur;
Fig. 4 ein Ausführungsbeispiel eines weiteren Bereichs der in Fig. 2 gezeigten Musterfigur;
Fig. 5 einen Bereich einer Musterfigur;
Fig. 6 eine Darstellung eines Ausführungsbeispiels von Stützpunkten eines Abschnitts einer Polylinie;
Fig. 7 eine Darstellung des in Fig. 6 gezeigten Abschnitts der Polylinie mit zwischen den Stützpunkten ergänzten Musterpunkten;
Fig. 8 eine Darstellung eines Ausführungsbeispiels des in Fig. 6 gezeigten Abschnitts der Polylinie mit zwischen den Stützpunkten ergänzten Musterpunkten;
Fig. 9 ein Ablaufdiagramm eines Ausführungsbeispiels eines Verfahrens zum Erstellen einer aus Musterpunkten bestehenden Musterfigur in einem Werkstück;
Fig. 10 ein Ablaufdiagramm eines Ausführungsbeispiels eines Verfahrens zum Erstellen einer aus Musterpunkten bestehenden Musterfigur in einem Werkstück; und
Fig. 11 eine schematische Darstellung einer Musterfigur 108 auf einem Werkstück 102.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

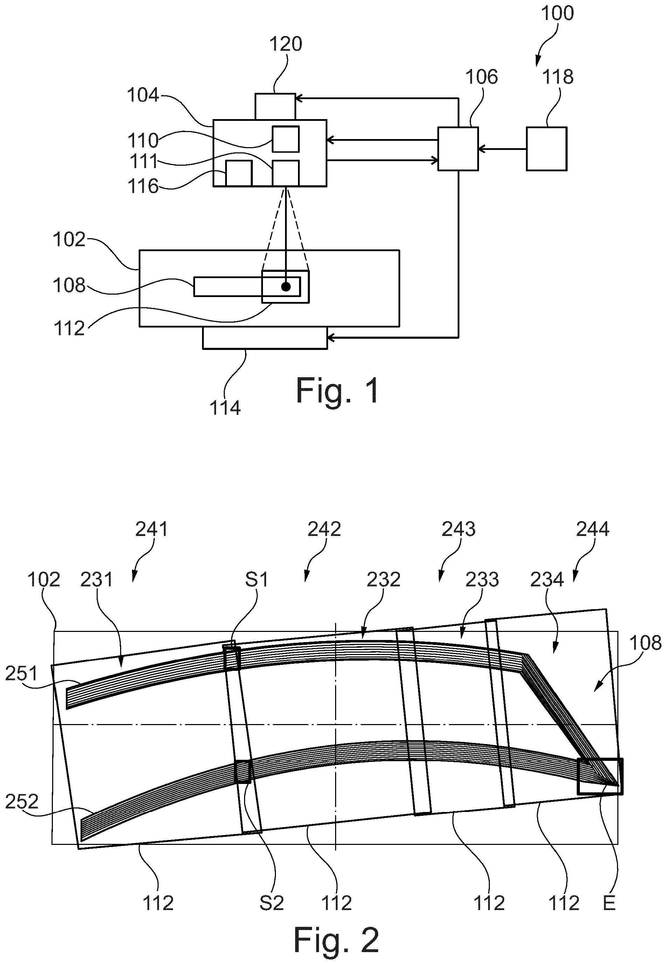

Fig. 1 zeigt ein Ausführungsbeispiel einer Bearbeitungsvorrichtung 100 zum Bearbeiten eines Werkstücks 102. Die Bearbeitungsvorrichtung 100 umfasst eine Lasereinrichtung 104 und eine Vorrichtung 106 zum Erstellen einer aus Musterpunkten bestehenden Musterfigur 108 in dem Werkstück 102 unter Verwendung der Lasereinrichtung 104. Gemäß einem Ausführungsbeispiel ist die Vorrichtung 106 als eine Steuereinrichtung der Bearbeitungsvorrichtung 100 ausgeführt und ausgebildet, um einen Betrieb der Bearbeitungsvorrichtung 100 zu steuern.

Die Lasereinrichtung 104 umfasst einen Laser 110, der ausgebildet ist um einen Laserstrahl in Richtung des Werkstücks 102 auszusenden, wenn das Werkstück 102 von der Bearbeitungsvorrichtung 100 aufgenommen ist. Dem Laser 110 ist ein Scanfeld 112 zugeordnet. Der Laserstrahl des Lasers 110 kann so bewegt werden, dass der Laserstrahl das gesamte Scanfeld 112 überstreichen kann. Beispielsweise umfasst die Lasereinrichtung 104 oder Laser 110 eine Lenkeinrichtung 111, beispielsweise in Form eines Scanners, zum Lenken des Laserstrahls in eine gewünschte Richtung. Der Laser 110 wird gemäß diesem Ausführungsbeispiel verwendet, um an unterschiedlichen Positionen innerhalb des Scanfelds 112 angeordneten Positionen Musterpunkte in das Werkstück 102 einzubringen.

In dem in Fig. 1 gezeigten Zustand befindet sich die Bearbeitungsvorrichtung 100 in einer ersten Pose, in der die Lasereinrichtung nur sich innerhalb des Scanfelds 112 befindliche Musterpunkte der Musterfigur in das Werkstück 102 einbringen kann. Da sich die Musterfigur über das Scanfeld 112 hinaus erstreckt, ist ein Überführen der Bearbeitungseinrichtung 100 in eine zweite Pose erforderlich, in der der die Lasereinrichtung beispielsweise die verbleibenden Musterpunkte der Musterfigur in das Werkstück 102 einbringen kann. Zum Überführen der Bearbeitungsvorrichtung 100 von der ersten Pose in die zweite Pose wird eine Relativposition zwischen der Lasereinrichtung 104 und dem Werkstück 102 verändert. Optional umfasst die Bearbeitungsvorrichtung 100 eine Halteeinrichtung 114, die ausgebildet ist, um das Werkstück 102 zu halten und optional gegenüber der Lasereinrichtung 104 zu verfahren. Beispielsweise ist die Halteeinrichtung 114 ausgebildet, um das Werkstück 102 während des Überführens der Bearbeitungsvorrichtung 100 von der ersten Pose in die zweite Pose zu verfahren. Optional umfasst die Bearbeitungsvorrichtung 100 eine Bewegungseinrichtung 120, die ausgebildet ist, um den Laser 110 und oder die Lasereinrichtung 104 relativ zu dem Werkstück 102 zu bewegen. Beispielsweise ist die Bewegungseinrichtung 120 ausgebildet, um den Laser 110 während des Überführens der Bearbeitungsvorrichtung 100 von der ersten Pose in die zweite Pose zu bewegen.

Gemäß einem Ausführungsbeispiel umfasst die Bearbeitungsvorrichtung 100 eine Bilderfassungseinrichtung 116, die ausgebildet ist, um ein Bild des Werkstücks 102 zu erfassen. Beispielsweise ist die Bilderfassungseinrichtung 116 in die Lasereinrichtung 104 integriert. Gemäß einem Ausführungsbeispiel wird die Lenkeinrichtung 111 oder alternativ ein weiterer Scanner, zusätzlich verwendet, um eine Blickrichtung der Bilderfassungseinrichtung 116 einzustellen.

Gemäß einem Ausführungsbeispiel ist die Vorrichtung 106 ausgebildet um ein erstes Steuersignal zum Steuern eines Betriebs des Lasereinrichtung 104 und optional ein zweites Steuersignal zum Steuern eines Betriebs der Halteeinrichtung 114 sowie optional ein drittes Steuersignal zum Steuern eines Betriebs der Bewegungseinrichtung 120 bereitzustellen. Beispielsweise ist das erste Steuersignal geeignet, um den Laser 110 so auszurichten, dass der Laserstrahl auf eine Position innerhalb des Scanfelds gerichtet ist, an dem ein Musterpunkt der Musterfigur 108 in das Werkstück 102 einzubringen ist. Beispielsweise ist das zweite Steuersignal geeignet, um die Halteeinrichtung 104 so anzusteuern, dass das Werkstück in eine einer einzunehmenden Pose zugeordneten Stellung verfahren wird. Beispielsweise ist das dritte Steuersignal geeignet, um die Bewegungseinrichtung 120 so anzusteuern, dass der Laser 110 in eine der einzunehmenden Pose zugeordneten Stellung verfahren wird. Gemäß einem Ausführungsbeispiel ist die Vorrichtung 106 ausgebildet, um ein Bildsignal einzulesen, das ein von der Bilderfassungseinrichtung 116 erfasstes Bild des Werkstücks 102 umfasst. Gemäß einem Ausführungsbeispiel ist die Vorrichtung 106 ausgebildet, um die Musterfigur 108 betreffende Daten über eine Schnittstelle zu einer Speichereinrichtung 118 einzulesen. Beispielsweise umfassen die Daten Positionsdaten, die Positionen von Musterpunkten der Musterfigur auf dem Werkstück 102 definieren. Die Positionsdaten können dabei vorbestimmt sein. Gemäß einem Ausführungsbeispiel ist die Vorrichtung 106 ausgebildet, um zumindest einen Teil eingelesener Positionsdaten anzupassen, um bei einem Übergang zwischen zwei Posen einen kontinuierlichen Übergang von ersten Musterpunkten zu zweiten Musterpunkten gewährleisten, wobei die ersten Musterpunkte in das Werkstück 102 eingebracht wurden, während sich die Bearbeitungsvorrichtung 100 in der ersten Pose befand, und die zweiten Musterpunkten in das Werkstück 102 eingebracht wurden, während sich die Bearbeitungsvorrichtung 100 in der zweiten Pose befand.

Die Bearbeitungsvorrichtung 100 eignet sich zum Bearbeiten einer Oberfläche des Werkstücks 102 mittels eines Laser-Bearbeitungsprozesses. Beispielsweise umfasst die Lasereinrichtung 102 einen Bearbeitungskopf mit der Bilderfassungseinrichtung 116 in Form einer optischen Erfassungseinrichtung, dem Laser 110 und der Lenkeinrichtung 111 zum Lenken des Laserstrahls des Lasers 110 auf das Werkstück 102. Die Lenkeinrichtung 111 umfasst beispielsweise einen beweglichen Spiegel, über den der Laserstrahl nacheinander in Richtung unterschiedlicher Positionen innerhalb des Scanfelds 112 gelenkt werden kann.

Eine Abmessung des Scanfelds 112 ergibt sich gemäß einem Ausführungsbeispiel aus einer maximal möglichen Ablenkung des Laserstrahls in x-, y- und z-Richtung. Gemäß einem Ausführungsbeispiel umfasst die Lasereinrichtung 104 oder der Laser 110 einen Galvanometerscanner zum Ablenken des Laserstrahls in Richtung des Werkstücks 102.

Unter Verwendung der Bearbeitungsvorrichtung 100 lässt sich ein Verfahren ausführen oder umsetzen, wie es anhand der nachfolgenden Figuren beschrieben ist. Beispielsweise wird die Vorrichtung 106 verwendet, um entsprechende Verfahrensschritte eines solchen Verfahrens anzusteuern oder auszuführen.

Der beschriebene Ansatz bezieht sich gemäß einem Ausführungsbeispiel auf ein Verfahren zum Herstellen von mindestens einer mehrere Musterpunkte umfassenden Musterfigur, beispielsweise der Musterfigur 108, auf dreidimensionalen Werkstücken, wie dem Werkstück 102 mittels des Lasers 110 in Verbindung mit einem Scanner, wie der Lenkeinrichtung 111. Die Musterpunkte werden in dem Werkstück 102 durch einen Materialabtrag mittels Laserablation erzeugt.

Als Beispiel sei der Abtrag von Schichten auf dem Werkstück 102 in Form einer lackierten Fahrzeugkomponente genannt. Die entstehende Musterfigur kann hinterleuchtet werden und bieten so Möglichkeiten für Informationsausgaben an Verkehrsteilnehmer, aber auch für personalisierte Designs.

Der beschriebene Ansatz bezieht sich speziell auf großflächige Musterfiguren, welche die technisch möglichen geometrischen Abmaße des Scanfeldes 112 überschreiten. Dabei geht es einerseits um das nahtlose "Aneinandersetzen" von einzelnen Scanfeldern und dabei insbesondere um den nahtlosen Übergang von "Anfang" und "Ende" bei geschlossenen Konturen der Musterfigur 108.

Dazu wird die Bearbeitungsvorrichtung 100 oder eine vergleichbare Vorrichtung gemäß einem Ausführungsbeispiel so angesteuert, dass im Laserprozess die gleichmäßige Anordnung von Musterelementen der Musterfigur 108 beim "Aneinandersetzen" der Scanfelder umgesetzt wird bzw. eine gleichmäßige Bearbeitung bei geometrischen bzw. designbedingten Begrenzungen auf dem Werkstück 102 erfolgt.

Weiterhin wird das gleichmäßige Aufbringen von Musterelementen in geschlossenen Konturen der Musterfigur 108 ermöglicht. Der Übergang vom Beginn des Laserprozesses am "Anfang" der Musterfigur 108 und dem Abschluss des Laserprozesses am "Ende" der Musterfigur 108 wird dabei gemäß einem Ausführungsbeispiel so gestaltet, dass er für das betrachtende Auge einer Person nicht sichtbar ist.

Im Folgenden werden einige Begriffe erläutert, die in den nachfolgenden Figuren verwendet werden:
Polylinie: Unter einer Polylinie wird eine geordnete Aneinanderreihung von Linien verstanden, wobei jede Linie durch zwei Stützpunkte (SP) im dreidimensionalen Raum definiert ist. Der Endpunkt einer Linie ist der Anfangspunkt der nächsten Linie. Stützpunkte sind reine Hilfsdaten und werden nicht gelasert.
Musterpunkte: Unter Musterpunkten werden Punkte entlang der Polylinie verstanden, welche für einen Lasereintrag / Laserbeschuss vorgesehen sind. Die Musterpunkte werden in einem ersten Schritt äquidistant verteilt, definiert durch Koordinaten x, y, z. Daraus ergibt sich jeweils ein einzelnes Element der Musterfigur 108.
Musterfigur 108: Unter der Musterfigur 108 wird eine Figur verstanden, welche aus einer Anordnung von einzelnen Musterpunkten besteht.
Scanfeld 112: Unter dem Scanfeld 112 wird ein maximaler Bereich der Auslenkung des Laserstrahls, beispielsweise mittels eines Galvanometerscanners in x-, y- und z-Richtung verstanden.
Stitching: Der Begriff Stitching kommt aus der Fotografie und bezeichnet das Zusammensetzen eines Bildes aus mehreren Einzelbildern. Hier beschreibt er das Zusammensetzen von einzelnen Mustern, welche jeweils innerhalb des Scanfelds 112 liegen zu einer Gesamtfigur, nämlich der Musterfigur 108. Die Musterfigur 108 überschreitet die Größe des Scanfelds 112.
Adaptive spacing: Unter adaptive spacing, auch als Abstandsanpassung bezeichnet, wird eine Anpassung der Abstände der Musterpunkte auf der Polylinie verstanden.

Fig. 2 zeigt eine schematische Darstellung einer Musterfigur 108 auf einem Werkstück 102 gemäß einem Ausführungsbeispiel. Die Musterfigur 108 ist beispielsweise unter Verwendung einer Bearbeitungsvorrichtung erstellt worden, wie sie anhand von Fig. 1 beschrieben ist.

Die Musterfigur 108 ist in vier Muster 231, 232, 233, 234 unterteilt. Zum Erstellen der Musterfigur 108 hat die Bearbeitungsvorrichtung vier unterschiedliche Posen 241, 242, 243, 244 eingenommen. Das erste Muster 231 liegt bei der ersten Pose 241 innerhalb des Scanfelds 112 der Bearbeitungsvorrichtung. Das zweite Muster 232 liegt bei der zweiten Pose 242 innerhalb des Scanfelds 112 der Bearbeitungsvorrichtung. Das dritte Muster 233 liegt bei der dritten Pose 243 innerhalb des Scanfelds 112 der Bearbeitungsvorrichtung. Das vierte Muster 234 liegt bei der vierten Pose 244 innerhalb des Scanfelds 112 der Bearbeitungsvorrichtung.

Die Musterfigur 108 umfasst zumindest eine erste Polylinie 251 und zumindest eine zweite Polylinie 252, die sich jeweils über alle Muster 231, 232, 233, 234 erstecken und in dem vierten Muster 234 in einem Bereich E zusammenlaufen.

Ein Bereich S1 stellt einen Übergang zwischen einem dem ersten Muster 231 zugeordneten Abschnitt der ersten Polylinie 251 und einem dem zweiten Muster 232 zugeordneten Abschnitt der ersten Polylinie 251 dar. Ein Bereich S2 stellt einen Übergang zwischen einem dem ersten Muster 231 zugeordneten Abschnitt der zweiten Polylinie 252 und einem dem zweiten Muster 232 zugeordneten Abschnitt der zweiten Polylinie 252 dar.

Der beschriebene Ansatz ermöglicht einen nahtlosen Übergang der Musterfigur 108 an den Übergängen zwischen den Mustern 231, 232, 233, 234, also beispielsweise in den Bereichen S1 und S2 sowie ein sauberes Zusammenlaufen der Polylinien 251, 252 in dem Bereich E.

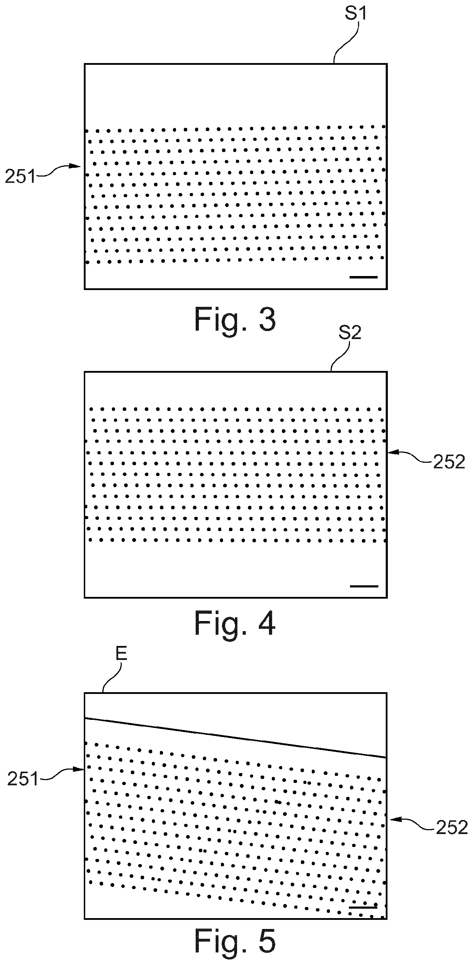

Fig. 3 zeigt ein Ausführungsbeispiel des in Fig. 2 gekennzeichneten Bereich S1 der Musterfigur. Beispielhaft sind eine Mehrzahl parallel zueinander verlaufender erster Polylinien 251 gezeigt, von denen der Übersichtlichkeit halber nur eine mit dem Bezugszeichen versehen ist. Die Musterpunkte der ersten Polylinien 251 weisen innerhalb des Bereichs S1, also an dem Übergang zwischen dem ersten Muster und dem zweiten Muster der Musterfigur, je den gleichen Abstand zwischen benachbarten Musterpunkten auf.

Fig. 4 zeigt ein Ausführungsbeispiel des in Fig. 2 gekennzeichneten Bereich S2 der Musterfigur. Beispielhaft sind eine Mehrzahl parallel zueinander verlaufender zweiter Polylinien 252 gezeigt, von denen der Übersichtlichkeit halber nur eine mit dem Bezugszeichen versehen ist. Die Musterpunkte der zweiten Polylinien 252 weisen innerhalb des Bereichs S2, also an dem Übergang zwischen dem ersten Muster und dem zweiten Muster der Musterfigur, je den gleichen Abstand zwischen benachbarten Musterpunkten auf.

Wie aus den Figuren 3 und 4 ersichtlich, ist das Stitching in den Bereichen S1, S2 erfolgreich.

Fig. 5 zeigt eine Ansicht des in Fig. 2 gekennzeichneten Bereich E der Musterfigur, für den Fall, das das Zusammentreffen der Polylinien 251, 252 ohne Abstandsanpassung durchgeführt ist. Dies führt dazu, dass an dem Zusammentreffen der Polylinien 251, 252 zwei Musterpunkte einen Abstand zueinander aufweisen, der sich von dem Abstand unterscheidet, den die anderen benachbarten Musterpunkte der Polylinien 251, 252 aufweisen.

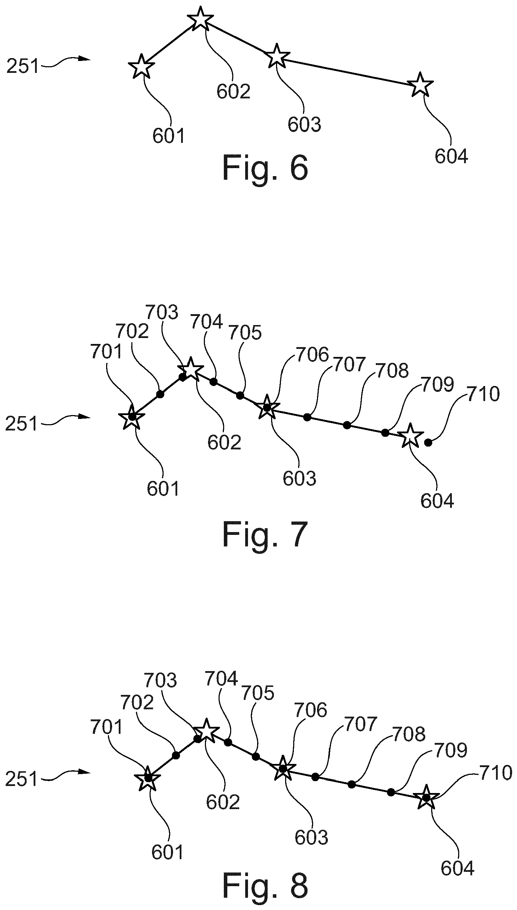

Fig. 6 zeigt eine Darstellung eines Ausführungsbeispiels von Stützpunkten 601, 602, 603, 604 eines Abschnitts einer Polylinie 251.

Fig. 7 zeigt eine Darstellung des in Fig. 6 gezeigten Abschnitts der Polylinie 251 mit zwischen den Stützpunkten 601, 602, 603, 604 ergänzten Musterpunkten 701, 702, 703, 704, 705, 706, 707, 708, 709, 710, wobei eine Verteilung der Musterpunkte 701, 702, 703, 704, 705, 706, 707, 708, 709, 710 ohne Abstandsanpassung durchgeführt ist. Dies hat dazu geführt, dass ein letzter Musterpunkt 710 des Abschnitts der Polylinie 251 nicht mit dem letzten Stützpunkt 604 des Abschnitts der Polylinie 251 zusammenfällt.

Fig. 8 zeigt eine Darstellung eines Ausführungsbeispiels des in Fig. 6 gezeigten Abschnitts der Polylinie 251 mit zwischen den Stützpunkten 601, 602, 603, 604 ergänzten Musterpunkten 701, 702, 703, 704, 705, 706, 707, 708, 709, 710, wobei eine Verteilung der Musterpunkte 701, 702, 703, 704, 705, 706, 707, 708, 709, 710 mit Abstandsanpassung (adaptive spacing) durchgeführt ist. Dies hat dazu geführt, dass der letzte Musterpunkt 710 des Abschnitts der Polylinie 251 mit dem letzten Stützpunkt 604 des Abschnitts der Polylinie 251 zusammenfällt.

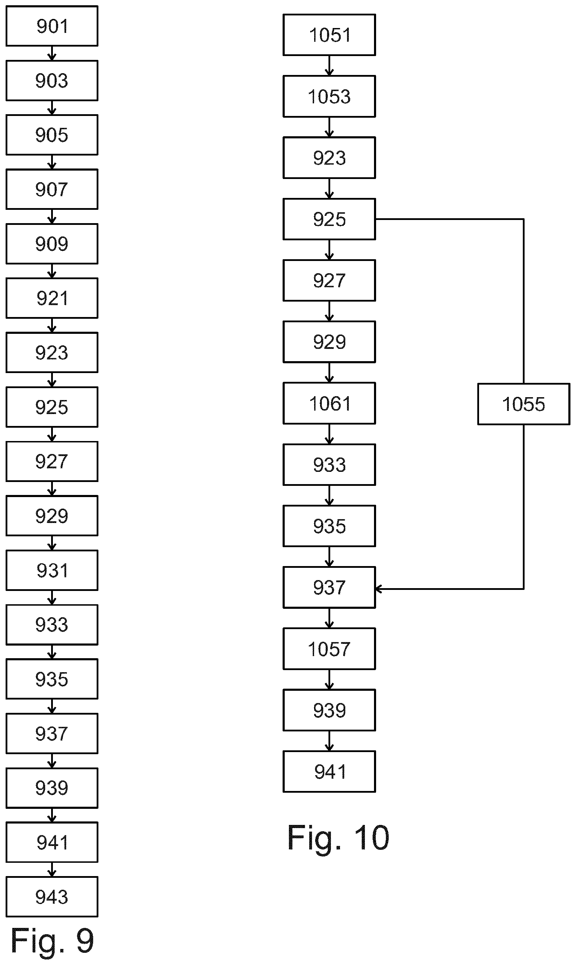

Fig. 9 zeigt ein Ablaufdiagramm eines Ausführungsbeispiels eines Verfahrens zum Erstellen einer aus Musterpunkten bestehenden Musterfigur in einem Werkstück. Das Verfahren wird beispielsweise im Zusammenhang mit einer Lasereinrichtung durchgeführt, wie sie anhand von Fig. 1 beschrieben ist.

Eine Prozessbeschreibung des Verfahrens ist dabei in einen einmalig für alle Werkstücke, die auch als Bauteile bezeichnet werden, durchzuführenden Prozessabschnitt und einen bauteilspezifischen Prozessabschnitt unterteilt. Die Prozessabschnitte können separat ausgeführt werden. Gemäß unterschiedlicher Ausführungsbeispiele können die Prozessabschnitte um weitere Verfahrensschritte ergänzt werden und es können gegebenenfalls nicht erforderliche Verfahrensschritte entfallen oder durch ähnliche Verfahrensschritt ergänzt werden.

Zunächst werden einmalig für alle Werkstücke durchzuführende Verfahrensschritte beschrieben.

In einem Schritt 901 wird ein Höhenprofil des Werkstücks aufgenommen. Der Schritt 901 wird durchgeführt, wenn sich das Werkstück in der Vorrichtung befindet, wie es beispielsweise in Fig. 1 gezeigt ist. Das Aufnehmen des Höhenprofils kann automatisiert oder beispielsweise mit einem Handscanner erfolgen. Alternativ können bereits einmalig aufgenommene Höhenprofildaten eingelesen werden.

In einem Schritt 903 erfolgt ein Morphen der gewünschten Musterfigur auf das Höhenprofil. Das Morphen wird beispielsweise mit dem open source Softwaretool Blender durchgeführt.

In einem Schritt 905 erfolgt ein Aufteilen in zur Bearbeitung des Werkstücks einzunehmenden Posen, wie sie beispielsweise anhand von Fig. 2 beschrieben sind. Wenn zum Ausrichten des Werkstücks gegenüber der Lasereinrichtung ein Roboter eingesetzt wird, können die Posen als Roboterposen, also einzelne Stellungen des Roboters, aufgefasst werden, die durch x-, y- und z-Koordinaten definiert sind. Dadurch kann das Scanfeld ideal ausgenutzt werden.

In einem Schritt 907 erfolgt ein Teilen der Musterfigur an den entstehenden Stitchingpositionen, also den Nahtstellen an den jeweiligen Grenzen des Scanfeldes und somit jeweils an dem Übergang zum nächsten Teil der Musterfigur, wie es beispielsweise in Fig. 2 anhand der beispielhaften Einteilung in vier Posen gezeigt ist.

In einem Schritt 909 werden Parameter, beispielsweise Bildverarbeitungsparameter für Stitchingpositionen vorbereiten. Dies kann automatisiert oder unter Verwendung einer Mensch-Maschine-Schnittstelle (HMI) durchgeführt werden.

Nun werden Bauteilspezifisch durchzuführende Verfahrensschritte beschrieben.

In einem Schritt 921 wird ein Einlegen in eine Vorrichtung durchgeführt, beispielsweise in die anhand von Fig. 1 beschriebene Bearbeitungsvorrichtung. Der Schritt 921 kann automatisiert oder manuell durchgeführt werden.

In einem Schritt 923 wird ein Abschnitt der Musterfigur in der Startpose gelasert. Bezogen auf Fig. 2 wird beispielsweise das erste Muster in das Werkstück eingebracht, während sich die Bearbeitungsvorrichtung in der ersten Pose befindet.

In einem Schritt 925 wird die nächste Pose angefahren. Bezogen auf Fig. 2 wird beispielsweise die zweite Pose eingestellt.

In einem Schritt 927 wird eine Bilderfassungseinrichtung zum Erfassen eines Abbildes des Werkstücks auf eine zu erwartende Stitchingposition ausgerichtet, also auf einen Übergang zwischen dem aktuell gelaserten Muster und einem nachfolgend zu lasernden Muster der Musterfigur. Beispielsweise wird dazu ein Scanner der Lasereinrichtung auf die zu erwartende Stitchingposition gestellt.

In einem Schritt 929 wird die Stitchingposition unterleuchtet, beispielsweise unter Verwendung von Leuchtdioden.

Im Folgenden wird ein erster Schritt einer Bildverarbeitung ausgeführt und ein Resultat der Bildverarbeitung wird geprüft. Der erste Schritt de Bildverarbeitung umfasst einen Schritt 931, indem die Bildverarbeitung anhand eines Hell-Dunkel-Kontrasts in zumindest einem erfassten Abbild des Werkstücks an der Stitchingposition mögliche Merkmale, sogenannte Features erkennt und deren Schwerpunkt bestimmt. In einem Schritt 933 werden die bestimmten Schwerpunkte (Pixel) in eine x-, y-Position umgerechnet. Dies führt zu einer Entzerrung. Die Schwerpunkte repräsentieren gemäß einem Ausführungsbeispiel in das Werkstück gelaserte Musterpunkte, die in dem Abbild unter Verwendung der Bildverarbeitung erkannt wurden.

Im Folgenden wird ein zweiter Schritt der Bildverarbeitung ausgeführt und auf Fehlermeldungen geprüft. Der zweite Schritt umfasst einen Schritt 935 des Bestimmens von Verläufen von Polylinien basierend auf den Schwerpunkten. Beispielsweise werden dabei unter Verwendung einer Bildverarbeitungssoftware zum Ausführen der Bildverarbeitung Linien geordnet. In einem Schritt 937 werden die Verläufe der Linien weitergeführt. Beispielsweise werden die von der Bildverarbeitungssoftware geordneten Linien durch lineare Regression weitergeführt und ein als nächstes zu setzender Punkt, ein sogenannter Aufpunkt, wird bestimmt.

In einem Schritt 939 wird der Aufpunkt verwendet, um angepasste Positionsdaten zu bestimmen. Beispielsweise wird dazu aus Konturlinien in einer Steuersoftware, beispielsweise zum Steuern der in Fig. 1 gezeigten Bearbeitungsvorrichtung, der Anfangspunkt bzw. der Endpunkt einer Polylinie durch den neu bestimmten Aufpunkt ersetzt. Dabei wird gemäß einem Ausführungsbeispiel die z-Koordinate aus der Scannerposition genutzt. Dadurch entsteht der Anschluss der Polylinien in der Steuersoftware an die Realposition der Stitchstelle auf dem Werkstück.

In einem Schritt 941 werden die sich aus dem Schritt 939 ergebenden Musterpunkte in das Werkstück eingebracht. Dazu werden die Resultate aus dem zweiten Schritt der Bildverarbeitung in die Steuersoftware geladen und es wird gelasert.

In einem Schritt 943 wird gegebenenfalls ein Doppelstitch oder eine Abstandsanpassung (adaptive spacing) oder ein Ineinanderlaufen in der letzten Pose zum Konturschließen durchgeführt. Dadurch kann beispielsweise der in Fig. 2 dargestellte Bereich E sauber ausgeführt werden.

Die Schritte 931, 933, 935, 937, 939 sind gemäß einem Ausführungsbeispiel einer Bild- und Datenverarbeitung in drei Schritten zugeordnet.

Die Schritte 929, 931, 933, 935, 937, 939, 941 werden für alle Stichstellen der aktuellen Pose wiederholt ausgeführt. Beispielhaft werden die Schritte 929, 931, 933, 935, 937, 939, 941 für jede Polylinie ausgeführt, die sich ausgehend von dem in der Startpose gelaserten Muster in dem in der nächsten Pose zu lasernden Muster fortsetzt.

Wenn nach einer aktuellen Pose eine weitere Pose folgt, wird nach der letzten Ausführung des Schritts 941 oder nach Ausführung des Schritts 943 für die aktuelle Pose zu dem Schritt 927 zurückgesprungen. Es werden also die Schritte 927, 929, 931, 933, 935, 937, 939, 941, 943 für alle Posen wiederholt ausgeführt.

Fig. 10 zeigt ein Ablaufdiagramm eines Ausführungsbeispiels eines Verfahrens zum Erstellen einer aus Musterpunkten bestehenden Musterfigur in einem Werkstück. Das Verfahren wird beispielsweise im Zusammenhang mit einer Lasereinrichtung durchgeführt, wie sie anhand von Fig. 1 beschrieben ist. Die Musterfigur ist zumindest aus einem ersten Muster und einem mit dem ersten Muster zusammenhängenden zweiten Muster zusammensetzt.

In einem Schritt 1051 werden erste Positionsdaten eingelesen, die Positionen von ersten Musterpunkten auf dem Werkstück definieren, wobei die ersten Musterpunkte einem dem ersten Muster zugeordneten ersten Abschnitt einer Polylinie der Musterfigur zugeordnet sind. Beispielsweise werden die Positionsdaten aus der in Fig. 1 gezeigten Speichereinrichtung eingelesen.

In einem Schritt 1053 wird eine erste Pose der Bearbeitungsvorrichtung eingestellt, beispielsweise angefahren, um ein Scanfeld der Lasereinrichtung auf eine zum Einbringen des ersten Musters vorgesehene erste Fläche des Werkstücks auszurichten.

In einem Schritt 923 wird die Lasereinrichtung zum Einbringen der ersten Musterpunkte in die erste Fläche des Werkstücks unter Verwendung der ersten Positionsdaten angesteuert. Während des Einbringens befindet sich die Bearbeitungsvorrichtung in der ersten Pose.

In einem Schritt 925 wird nach Fertigstellung des ersten Musters eine zweite Pose eingestellt, um das Scanfeld der Lasereinrichtung auf eine zum Einbringen des zweiten Musters vorgesehene zweite Fläche des Werkstücks auszurichten.

In einem Schritt 1055 wird ein an die zweite Fläche angrenzender Verlauf eines Endes des ersten Abschnitts der Polylinie erkannt. Dazu kann beispielsweise ein von der Bilderfassungseinrichtung der Bearbeitungsvorrichtung erfasstes Abbild des Werkstücks einer geeigneten Bildverarbeitung unterzogen werden.

In einem Schritt 937 wird der im Schritt 1055 erkannte Verlauf des Endes des ersten Abschnitts der Polylinie in die zweite Fläche hineingeführt, um eine Position eines in der zweiten Fläche angeordneten Aufpunkts eines dem zweiten Muster zugeordneten zweiten Abschnitts der Polylinie zu bestimmen. Der Schritt 937 kann als Teil der Bildverarbeitung ausgeführt werden.

In einem Schritt 1057 werden zweite Positionsdaten eingelesen, die Positionen von zweiten Musterpunkten auf dem Werkstück definieren, wobei die zweiten Musterpunkte dem zweiten Abschnitt der Polylinie zugeordnet sind, wobei ein Endpunkt der ersten Musterpunkte und ein Anfangspunkt der zweiten Musterpunkte einen Übergang der Polylinie von dem ersten Muster zu dem zweiten Muster definieren und ein Endpunkt der zweiten Musterpunkte ein Ende der Polylinie in dem zweiten Muster definiert. Beispielsweise werden die zweiten Positionsdaten aus der in Fig. 1 gezeigten Speichereinrichtung eingelesen.

In einem Schritt 939 werden angepasste zweite Positionsdaten bestimmt, die an die Position des Aufpunkts angepasste Positionen der zweiten Musterpunkte auf dem Werkstück definieren, wobei eine Position des Anfangspunkts der zweiten Musterpunkte durch die Position des Aufpunkts ersetzt wird.

In einem Schritt 941 wird die Lasereinrichtung zum Einbringen der zweiten Musterpunkte in die zweite Fläche des Werkstücks unter Verwendung der angepassten zweiten Positionsdaten angesteuert. Dabei befindet sich die Bearbeitungsvorrichtung in der zweiten Pose.

Gemäß einem Ausführungsbeispiel umfasst der Schritt 1055 des Erkennens einen Schritt 927, in dem die Bilderfassungseinrichtung der Bearbeitungsvorrichtung auf den Übergang der Polylinie von dem ersten Muster zu dem zweiten Muster ausgerichtet wird, einen Schritt 1061, in dem ein Bilds des Übergangs unter Verwendung der Bilderfassungseinrichtung erfasst wird, einen Schritt 933, in dem Abbilder von ersten Musterpunkten in dem Bild erfasst werden, sowie einen Schritt 935, in dem der Verlauf des Endes des ersten Abschnitts der Polylinie unter Verwendung der Abbilder von ersten Musterpunkten bestimmt wird. Optional umfasst der Schritt 1055 des Erkennens ferner einen Schritt 929, in dem der Übergang der Polylinie von dem ersten Muster zu dem zweiten Muster hinterleuchtet wird.

Gemäß einem Ausführungsbeispiel wird im Schritt 939 des Bestimmens von angepassten zweiten Positionsdaten eine angepasste Position des Endpunkts der zweiten Musterpunkte gelöscht, wenn eine Länge des durch die angepassten Positionen von zweiten Musterpunkten auf dem Werkstück definierten zweiten Abschnitts der Polylinie länger als eine vorbestimmte Länge des zweiten Abschnitts der Polylinie ist. Alternativ wird im Schritt 939 des Bestimmens ein Abstand zwischen benachbarten angepassten Positionen der zweiten Musterpunkte gegenüber einem Abstand zwischen benachbarten Positionen der zweiten Musterpunkte verändert, wenn sich eine Länge des durch die angepassten Positionen von zweiten Musterpunkten auf dem Werkstück definierten zweiten Abschnitts der Polylinie von einer vorbestimmten Länge des zweiten Abschnitts der Polylinie unterscheidet. Dies wird auch als adaptiv spacing bezeichnet.

Das Verfahren kann zumindest teilweise wiederholt und/oder modifiziert ausgeführt werden, um Musterpunkte weiterer und zusätzlicher Polylinien der Musterfigur herzustellen.

Zum Herstellen einer weiteren Polylinie werden gemäß einem Ausführungsbeispiel im Schritt 1051 die Positionsdaten eingelesen, die ferner Positionen von weiteren ersten Musterpunkten auf dem Werkstück definieren, wobei die weiteren ersten Musterpunkte einem dem ersten Muster zugeordneten ersten Abschnitt einer weiteren Polylinie der Musterfigur zugeordnet sind. Im Schritt 923 wird die Lasereinrichtung ferner zum Einbringen der weiteren ersten Musterpunkte in die erste Fläche des Werkstücks unter Verwendung der ersten Positionsdaten angesteuert, während sich die Bearbeitungsvorrichtung in der ersten Pose befindet. In einem wiederholten Schritt 1055 wird ein an die zweite Fläche angrenzender Verlauf eines Endes des ersten Abschnitts der weiteren Polylinie erkannt. In einem wiederholten Schritt 937 des Weiterführens wird der Verlauf des Endes des ersten Abschnitts der weiteren Polylinie in die zweite Fläche hinein weitergeführt, um eine Position eines in der zweiten Fläche angeordneten weiteren Aufpunkts eines dem zweiten Muster zugeordneten zweiten Abschnitts der weiteren Polylinie zu bestimmen. im Schritt 1057 des Einlesens von zweiten Positionsdaten, werden die zweiten Positionsdaten eingelesen, die ferner Positionen von weiteren zweiten Musterpunkten auf dem Werkstück definieren, wobei die weiteren zweiten Musterpunkte dem zweiten Abschnitt der weiteren Polylinie zugeordnet sind, wobei ein Endpunkt der weiteren ersten Musterpunkte und ein Anfangspunkt der weiteren zweiten Musterpunkte einen Übergang der weiteren Polylinie von dem ersten Muster zu dem zweiten Muster definieren und ein Endpunkt der weiteren zweiten Musterpunkte ein Ende der weiteren Polylinie in dem zweiten Muster definiert. Im Schritt des Bestimmens von angepassten zweiten Positionsdaten werden die angepassten zweiten Positionsdaten bestimmt, die ferner an die Position des weiteren Aufpunkts angepasste Positionen der weiteren zweiten Musterpunkte auf dem Werkstück definieren, wobei eine Position des Anfangspunkts der weiteren zweiten Musterpunkte durch die Position des weiteren Aufpunkts ersetzt wird. Im Schritt 941 des Ansteuerns wird die Lasereinrichtung ferner zum Einbringen der weiteren zweiten Musterpunkte in die zweite Fläche des Werkstücks unter Verwendung der angepassten zweiten Positionsdaten angesteuert, während sich die Bearbeitungsvorrichtung in der zweiten Pose befindet.

Zum Herstellen einer zusätzlichen Polylinie, die mit der Polylinie zusammenläuft werden gemäß einem Ausführungsbeispiel im Schritt 1051 des Einlesens die ersten Positionsdaten eingelesen, die ferner Positionen von zusätzlichen ersten Musterpunkten auf dem Werkstück definieren, wobei die zusätzlichen ersten Musterpunkte einem dem ersten Muster zugeordneten ersten Abschnitt einer zusätzlichen Polylinie der Musterfigur zugeordnet sind. Im Schritt des Ansteuerns der Lasereinrichtung zum Einbringen der ersten Musterpunkte, wird die Lasereinrichtung ferner zum Einbringen der zusätzlichen ersten Musterpunkte in die erste Fläche des Werkstücks unter Verwendung der ersten Positionsdaten angesteuert, während sich die Bearbeitungsvorrichtung in der ersten Pose befindet. In dem Schritt 1055 des Erkennens wird ferner ein an die zweite Fläche angrenzender Verlauf eines Endes des ersten Abschnitts der zusätzlichen Polylinie erkannt. In dem Schritt 937 des Weiterführens wird ferner der Verlauf des Endes des ersten Abschnitts der zusätzlichen Polylinie 1180 in die zweite Fläche hinein weitergeführt, um eine Position eines in der zweiten Fläche angeordneten zusätzlichen Aufpunkts eines dem zweiten Muster zugeordneten zweiten Abschnitts der zusätzlichen Polylinie zu bestimmen. Im Schritt 1057 werden die zweiten Positionsdaten eingelesen, die ferner Positionen von zusätzlichen zweiten Musterpunkten auf dem Werkstück definieren, wobei die zusätzlichen zweiten Musterpunkte einem dem zweiten Muster zugeordneten zweiten Abschnitt der zusätzlichen Polylinie zugeordnet sind, wobei ein Endpunkt der zusätzlichen ersten Musterpunkte und ein Anfangspunkt der zusätzlichen zweiten Musterpunkte einen Übergang der zusätzlichen Polylinie von dem ersten Muster zu dem zweiten Muster definieren und ein Endpunkt der zusätzlichen zweiten Musterpunkte ein Ende der zusätzlichen Polylinie in dem zweiten Muster definiert, wobei die Position des Endpunkts der zweiten Musterpunkte mit der Position des Endpunkts der zusätzlichen zweiten Musterpunkte zusammenfällt, um die Enden der Polylinie und der zusätzlichen Polylinie zusammenzuführen. In dem Schritt 939 werden die angepassten zweiten Positionsdaten bestimmt, die ferner an die Position des zusätzlichen Aufpunkts angepasste Positionen der zusätzlichen zweiten Musterpunkte auf dem Werkstück definieren, wobei eine Position des Anfangspunkts der zusätzlichen zweiten Musterpunkte durch die Position des zusätzlichen Aufpunkts ersetzt wird. In dem Schritt 941 wird die Lasereinrichtung ferner zum Einbringen der zusätzlichen zweiten Musterpunkte in die zweite Fläche des Werkstücks unter Verwendung der angepassten zweiten Positionsdaten angesteuert, während sich die Bearbeitungsvorrichtung in der zweiten Pose befindet.

Gemäß einem Ausführungsbeispiel wird im Schritt 939 des Bestimmens von angepassten zweiten Positionsdaten ein Abstand zwischen benachbarten angepassten Positionen der zusätzlichen zweiten Musterpunkte gegenüber einem Abstand zwischen benachbarten Positionen der zusätzlichen zweiten Musterpunkte verändert, wenn eine Länge des durch die angepassten Positionen von zusätzlichen zweiten Musterpunkten auf dem Werkstück definierten zweiten Abschnitts der zusätzlichen Polylinie länger als eine vorbestimmte Länge des zweiten Abschnitts der zusätzlichen Polylinie ist.

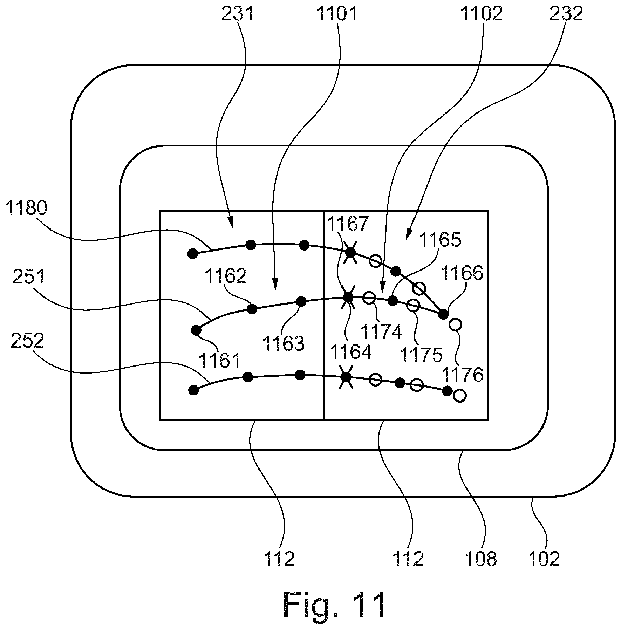

Fig. 11 zeigt eine schematische Darstellung einer Musterfigur 108 auf einem Werkstück 102. Die Musterfigur 108 ist beispielsweise unter Verwendung eines Verfahrens herstellbar, wie es anhand der Figuren 10 und 12 beschrieben ist.

Die Musterfigur 108 ist in zwei Muster 231, 232 unterteilt. Zum Erstellen der Musterfigur 108 wird die Bearbeitungsvorrichtung in zwei unterschiedliche Posen eingestellt. Das erste Muster 231 liegt bei der ersten Pose innerhalb des Scanfelds 112 der Bearbeitungsvorrichtung. Das zweite Muster 232 liegt bei der zweiten Pose innerhalb des Scanfelds 112 der Bearbeitungsvorrichtung.

Die Musterfigur 108 umfasst eine Polylinie 251 und optional eine weitere Polylinie 252. Ein erster Abschnitt 1101 der Polylinie 251 verläuft innerhalb des ersten Musters 231 und ein zweiter Abschnitt 1102 der Polylinie 251 verläuft innerhalb des zweiten Musters 232.

Beispielhaft sind von dem ersten Abschnitt 1101 der Polylinie 251 drei erste Musterpunkte 1161, 1162, 1163 und von dem zweiten Abschnitt 1102 der Polylinie 251 drei zweite Musterpunkte 1164, 1165, 1166 gezeigt. Der Musterpunkt 1164 stellt einen Aufpunkt 1167 dar. Die zweiten Musterpunkte 1164, 1165, 1166 sind zumindest teilweise gegenüber ursprünglich eingelesenen Positionen 1174, 1175, 1176 versetzt angeordnet, um den Musterpunkt 1164, der einen Anfangspunkt der zweiten Musterpunkte 1164, 1165, 1166 darstellt, in Übereinstimmung mit den Aufpunkt 1167 zu bringen. Der erste Musterpunkt 1163 stellt einen Endpunkt der ersten Musterpunkte 1161, 1162, 1163 dar. Der zweite Musterpunkt 1166 stellt einen Endpunkt der zweiten Musterpunkte 1164, 1165, 1166 dar.

Gemäß einem Ausführungsbeispiel ist die weitere Polylinie 252 beispielhaft entsprechend zu der Polylinie 251 mit weiteren ersten Musterpunkten eines dem ersten Muster 231 zugeordneten ersten Abschnitts und mit weiteren zweiten Musterpunkten eines dem zweiten Muster 232 zugeordneten zweiten Abschnitts dargestellt.

Die Musterfigur 108 umfasst optional eine zusätzliche Polylinie 1180. Gemäß einem Ausführungsbeispiel ist die zusätzliche Polylinie 1180 beispielhaft entsprechend zu der Polylinie 251 mit zusätzliche ersten Musterpunkten eines dem ersten Muster 231 zugeordneten ersten Abschnitts und mit zusätzliche zweiten Musterpunkten eines dem zweiten Muster 232 zugeordneten zweiten Abschnitts der zusätzlichen Polylinie 1180 dargestellt.

Die Position 1176 des Endpunkts der zweiten Musterpunkte 1164, 1165, 1166 fällt mit der Position des Endpunkts der zusätzlichen zweiten Musterpunkte zusammen. Dadurch werden die Enden der Polylinie 251 und der zusätzlichen Polylinie 1180 zusammengeführt. Für die zusätzliche Polylinie 1180 werden angepassten zweite Positionsdaten bestimmt, die dazu führen, dass die zusätzlichen zweiten Musterpunkte so in das Werkstück eingebracht werden, dass der Endpunkt der zusätzlichen Polylinie 1180 mit dem Musterpunkt 1166 zusammenfällt. Dies wird gemäß einem Ausführungsbeispiel dadurch erreicht, dass die angepassten Positionen der zusätzlichen zweiten Musterpunkte sowohl an den zusätzlichen Aufpunkt angepasst werden und zudem ein Abstand zwischen benachbarten angepassten Positionen der zusätzlichen zweiten Musterpunkte geeignet angepasst wird.

## Patentansprüche

1. Verfahren zum Erstellen einer aus Musterpunkten bestehenden Musterfigur (108) in einem Werkstück (102) unter Verwendung einer Lasereinrichtung (104) einer Bearbeitungsvorrichtung (100), wobei sich die Musterfigur (108) zumindest aus einem ersten Muster (231) und einem mit dem ersten Muster (231) zusammenhängenden zweiten Muster (232) zusammensetzt:
Einlesen (1051) von ersten Positionsdaten, die Positionen von ersten Musterpunkten (1161, 1162, 1163) auf dem Werkstück (102) definieren, wobei die ersten Musterpunkte (1161, 1162, 1163) einem dem ersten Muster (231) zugeordneten ersten Abschnitt (1101) einer Polylinie (251) der Musterfigur (108) zugeordnet sind;
Einstellen (1053) einer ersten Pose (241) der Bearbeitungsvorrichtung (100), um ein Scanfeld der Lasereinrichtung (104) auf eine zum Einbringen des ersten Musters (231) vorgesehene erste Fläche des Werkstücks (102) auszurichten;
Ansteuern (923) der Lasereinrichtung (104) zum Einbringen der ersten Musterpunkte (1161, 1162, 1163) in die erste Fläche des Werkstücks (102) unter Verwendung der ersten Positionsdaten, während sich die Bearbeitungsvorrichtung (100) in der ersten Pose (241) befindet;
Einstellen (925) einer zweiten Pose (242), um das Scanfeld der Lasereinrichtung (104) auf eine zum Einbringen des zweiten Musters (232) vorgesehene zweite Fläche des Werkstücks (102) auszurichten;
Erkennen (1055) eines an die zweite Fläche angrenzenden Verlaufs eines Endes des ersten Abschnitts der Polylinie (251);
Weiterführen (937) des Verlaufs des Endes des ersten Abschnitts der Polylinie (251) in die zweite Fläche hinein, um eine Position eines in der zweiten Fläche angeordneten Aufpunkts (1167) eines dem zweiten Muster (232) zugeordneten zweiten Abschnitts (1102) der Polylinie (251) zu bestimmen;
Einlesen (1057) von zweiten Positionsdaten, die Positionen (1174, 1175, 1176) von zweiten Musterpunkten (1164, 1165, 1166) auf dem Werkstück (102) definieren, wobei die zweiten Musterpunkte (1164, 1165, 1166) dem zweiten Abschnitt (1102) der Polylinie (251) zugeordnet sind, wobei ein Endpunkt der ersten Musterpunkte (1161, 1162, 1163) und ein Anfangspunkt der zweiten Musterpunkte (1164, 1165, 1166) einen Übergang der Polylinie (251) von dem ersten Muster (231) zu dem zweiten Muster (232) definieren und ein Endpunkt der zweiten Musterpunkte (1164, 1165, 1166) ein Ende der Polylinie in dem zweiten Muster (232) definiert;
Bestimmen (939) von angepassten zweiten Positionsdaten, die an die Position des Aufpunkts (1167) angepasste Positionen der zweiten Musterpunkte (1164, 1165, 1166) auf dem Werkstück (102) definieren, wobei die Position (1174) des Anfangspunkts der zweiten Musterpunkte (1164, 1165, 1166) durch die Position des Aufpunkts (1167) ersetzt wird;
Ansteuern (941) der Lasereinrichtung (104) zum Einbringen der zweiten Musterpunkte (1164, 1165, 1166) in die zweite Fläche des Werkstücks (102) unter Verwendung der angepassten zweiten Positionsdaten, während sich die Bearbeitungsvorrichtung (100) in der zweiten Pose (242) befindet.

2. Verfahren gemäß Anspruch 1, wobei der Schritt (1055) des Erkennens einen Schritt (927) des Ausrichtens einer Bilderfassungseinrichtung (116) der Bearbeitungsvorrichtung (100) auf den Übergang der Polylinie (251) von dem ersten Muster (231) zu dem zweiten Muster (232) umfasst, einen Schritt (1061) des Erfassens eines Bilds des Übergangs unter Verwendung der Bilderfassungseinrichtung (116) umfasst, einen Schritt (933) des Erkennens von Abbildern von ersten Musterpunkten (1162, 1163) in dem Bild umfasst, und einen Schritt (935) des Bestimmens des Verlaufs des Endes des ersten Abschnitts (251) der Polylinie unter Verwendung der Abbilder von ersten Musterpunkten (1162, 1163) umfasst.

3. Verfahren gemäß einem der vorangegangenen Ansprüche, wobei der Schritt (1055) des Erkennens einen Schritt (929) des Unterleuchtens des Übergangs der Polylinie (251) von dem ersten Muster (231) zu dem zweiten Muster (232) umfasst.

4. Verfahren gemäß einem der vorangegangenen Ansprüche, wobei im Schritt (937) des Weiterführens der Verlauf des Endes des ersten Abschnitts (1101) der Polylinie (251) durch lineare Regression in die zweite Fläche hinein weitergeführt wird.

5. Verfahren gemäß einem der vorangegangenen Ansprüche, wobei im Schritt (939) des Bestimmens von angepassten zweiten Positionsdaten eine angepasste Position des Endpunkts der zweiten Musterpunkte (1164, 1165, 1166) gelöscht wird, wenn eine Länge des durch die angepassten Positionen von zweiten Musterpunkten (1164, 1165, 1166) auf dem Werkstück (102) definierten zweiten Abschnitts der Polylinie (251) länger als eine vorbestimmte Länge des zweiten Abschnitts (1102) der Polylinie (251) ist.

6. Verfahren gemäß einem der vorangegangenen Ansprüche, wobei im Schritt (939) des Bestimmens von angepassten zweiten Positionsdaten ein Abstand zwischen benachbarten angepassten Positionen der zweiten Musterpunkte (1164, 1165, 1166) gegenüber einem Abstand zwischen benachbarten Positionen (1174, 1175, 1176) der zweiten Musterpunkte (1164, 1165, 1166) verändert wird, wenn sich eine Länge des durch die angepassten Positionen von zweiten Musterpunkten (1164, 1165, 1166) auf dem Werkstück (102) definierten zweiten Abschnitts (1102) der Polylinie (251) von einer vorbestimmten Länge des zweiten Abschnitts (1102) der Polylinie (251) unterscheidet.

7. Verfahren gemäß einem der vorangegangenen Ansprüche, bei dem
im Schritt (1051) des Einlesens von ersten Positionsdaten, die ersten Positionsdaten ferner Positionen von weiteren ersten Musterpunkten auf dem Werkstück (102) definieren, wobei die weiteren ersten Musterpunkte einem dem ersten Muster (231) zugeordneten ersten Abschnitt einer weiteren Polylinie (252) der Musterfigur (108) zugeordnet sind;
im Schritt (923) des Ansteuerns der Lasereinrichtung (104) zum Einbringen der ersten Musterpunkte (1161, 1162, 1163), die Lasereinrichtung (104) ferner zum Einbringen der weiteren ersten Musterpunkte in die erste Fläche des Werkstücks (102) unter Verwendung der ersten Positionsdaten angesteuert wird, während sich die Bearbeitungsvorrichtung (100) in der ersten Pose (241) befindet;
in einem wiederholten Schritt (1055) des Erkennens ein an die zweite Fläche angrenzender Verlauf eines Endes des ersten Abschnitts der weiteren Polylinie (252) erkannt wird;
in einem wiederholten Schritt (937) des Weiterführens der Verlauf des Endes des ersten Abschnitts der weiteren Polylinie (252) in die zweite Fläche hinein weitergeführt wird, um eine Position eines in der zweiten Fläche angeordneten weiteren Aufpunkts eines dem zweiten Muster (232) zugeordneten zweiten Abschnitts der weiteren Polylinie (252) zu bestimmen;
im Schritt (1057) des Einlesens von zweiten Positionsdaten, die zweiten Positionsdaten ferner Positionen von weiteren zweiten Musterpunkten auf dem Werkstück (102) definieren, wobei die weiteren zweiten Musterpunkte dem zweiten Abschnitt der weiteren Polylinie (252) zugeordnet sind, wobei ein Endpunkt der weiteren ersten Musterpunkte und ein Anfangspunkt der weiteren zweiten Musterpunkte einen Übergang der weiteren Polylinie (252) von dem ersten Muster (231) zu dem zweiten Muster (232) definieren und ein Endpunkt der weiteren zweiten Musterpunkte ein Ende der weiteren Polylinie (252) in dem zweiten Muster (232) definiert;
im Schritt (939) des Bestimmens von angepassten zweiten Positionsdaten die angepassten zweiten Positionsdaten bestimmt werden, die ferner an die Position des weiteren Aufpunkts angepasste Positionen der weiteren zweiten Musterpunkte auf dem Werkstück (102) definieren, wobei eine Position des Anfangspunkts der weiteren zweiten Musterpunkte durch die Position des weiteren Aufpunkts ersetzt wird;
im Schritt (941) des Ansteuerns der Lasereinrichtung (104) zum Einbringen der zweiten Musterpunkte (1164, 1165, 1166), die Lasereinrichtung (104) ferner zum Einbringen der weiteren zweiten Musterpunkte in die zweite Fläche des Werkstücks (102) unter Verwendung der angepassten zweiten Positionsdaten angesteuert wird, während sich die Bearbeitungsvorrichtung (100) in der zweiten Pose (242) befindet.

8. Verfahren gemäß einem der Ansprüche 1 bis 6, bei dem
im Schritt (1051) des Einlesens von ersten Positionsdaten, die ersten Positionsdaten ferner Positionen von zusätzlichen ersten Musterpunkten auf dem Werkstück (102) definieren, wobei die zusätzlichen ersten Musterpunkte einem dem ersten Muster (231) zugeordneten ersten Abschnitt einer zusätzlichen Polylinie 1180 der Musterfigur (108) zugeordnet sind;
im Schritt (923) des Ansteuerns der Lasereinrichtung (104) zum Einbringen der ersten Musterpunkte (1161, 1162, 1163), die Lasereinrichtung (104) ferner zum Einbringen der zusätzlichen ersten Musterpunkte in die erste Fläche des Werkstücks (102) unter Verwendung der ersten Positionsdaten angesteuert wird, während sich die Bearbeitungsvorrichtung (100) in der ersten Pose (241) befindet;
in dem Schritt (1055) des Erkennens ferner ein an die zweite Fläche angrenzender Verlauf eines Endes des ersten Abschnitts der zusätzlichen Polylinie (1180) erkannt wird;
in dem Schritt (937) des Weiterführens ferner der Verlauf des Endes des ersten Abschnitts der zusätzlichen Polylinie (1180) in die zweite Fläche hinein weitergeführt wird, um eine Position eines in der zweiten Fläche angeordneten zusätzlichen Aufpunkts eines dem zweiten Muster (232) zugeordneten zweiten Abschnitts der zusätzlichen Polylinie (1180) zu bestimmen;
im Schritt (1057) des Einlesens von zweiten Positionsdaten, die zweiten Positionsdaten ferner Positionen von zusätzlichen zweiten Musterpunkten auf dem Werkstück (102) definieren, wobei die zusätzlichen zweiten Musterpunkte einem dem zweiten Muster (232) zugeordneten zweiten Abschnitt der zusätzlichen Polylinie (1180) zugeordnet sind, wobei ein Endpunkt der zusätzlichen ersten Musterpunkte und ein Anfangspunkt der zusätzlichen zweiten Musterpunkte einen Übergang der zusätzlichen Polylinie (1180) von dem ersten Muster (231) zu dem zweiten Muster (232) definieren und ein Endpunkt der zusätzlichen zweiten Musterpunkte ein Ende der zusätzlichen Polylinie (1180) in dem zweiten Muster (232) definiert, wobei die Position des Endpunkts der zweiten Musterpunkte (1164, 1165, 1166) mit der Position des Endpunkts der zusätzlichen zweiten Musterpunkte zusammenfällt, um die Enden der Polylinie (251) und der zusätzlichen Polylinie (1180) zusammenzuführen;
im Schritt (939) des Bestimmens von angepassten zweiten Positionsdaten die angepassten zweiten Positionsdaten bestimmt werden, die ferner an die Position des zusätzlichen Aufpunkts angepasste Positionen der zusätzlichen zweiten Musterpunkte auf dem Werkstück (102) definieren, wobei eine Position des Anfangspunkts der zusätzlichen zweiten Musterpunkte durch die Position des zusätzlichen Aufpunkts ersetzt wird;
im Schritt (941) des Ansteuerns der Lasereinrichtung (104) zum Einbringen der zweiten Musterpunkte (1164, 1165, 1166), die Lasereinrichtung (104) ferner zum Einbringen der zusätzlichen zweiten Musterpunkte (1164, 1165, 1166) in die zweite Fläche des Werkstücks (102) unter Verwendung der angepassten zweiten Positionsdaten angesteuert wird, während sich die Bearbeitungsvorrichtung (100) in der zweiten Pose (242) befindet.

9. Verfahren gemäß Anspruch 8, wobei im Schritt (939) des Bestimmens von angepassten zweiten Positionsdaten ein Abstand zwischen benachbarten angepassten Positionen der zusätzlichen zweiten Musterpunkte gegenüber einem Abstand zwischen benachbarten Positionen der zusätzlichen zweiten Musterpunkte verändert wird, wenn eine Länge des durch die angepassten Positionen von zusätzlichen zweiten Musterpunkten auf dem Werkstück (102) definierten zweiten Abschnitts der zusätzlichen Polylinie (1180) länger als eine vorbestimmte Länge des zweiten Abschnitts der zusätzlichen Polylinie (1180) ist.

10. Verfahren gemäß einem der vorangegangenen Ansprüche, mit einem Schritt (903) des Morphens der Musterfigur (108) auf ein Höhenprofil des Werkstücks (102), einem Schritt (905) des Definierens der ersten Pose (241) und der zweiten Pose (242) der Bearbeitungsvorrichtung (100), und einem Schritt (907) des Teilens der Musterfigur (108) in das erste Muster (231) und das zweite Muster (232).

11. Verfahren gemäß Anspruch 10, mit einem Schritt (901) des Aufnehmens des Höhenprofils des Werkstücks (102).

12. Vorrichtung (106) zum Erstellen einer aus Musterpunkten bestehenden Musterfigur (108) in einem Werkstück (102) unter Verwendung einer Lasereinrichtung (104) einer Bearbeitungsvorrichtung (100), wobei die Vorrichtung (106) eingerichtet ist, um die Schritte des Verfahrens gemäß einem der vorangegangenen Ansprüche in entsprechenden Einheiten auszuführen und anzusteuern.

13. Bearbeitungsvorrichtung (100) mit einer Lasereinrichtung (104) und einer Vorrichtung (106) gemäß Anspruch 12.

14. Computerprogramm, welches auf einem maschinenlesbaren Träger oder Speichermedium wie einem Halbleiterspeicher, einem Festplattenspeicher oder einem optischen Speicher gespeichert sein kann, das dazu eingerichtet ist, die Schritte des Verfahrens gemäß einem der Ansprüche 1 bis 11 auszuführen und anzusteuern.
